(19) Europäisches Patentamt
European Patent Office
Office européen des brevets

(11) **EP 4 730 461 A1**

(12) **EUROPEAN PATENT APPLICATION**

(43) Date of publication:
**22.04.2026 Bulletin 2026/17**

(21) Application number: **25206097.5**

(22) Date of filing: **01.10.2025**

(51) International Patent Classification (IPC):
***H01M 10/052*** (2010.01)   ***H01M 10/056*** (2010.01)

(52) Cooperative Patent Classification (CPC):
**H01M 10/056; H01M 10/052;** H01M 2300/0025;
H01M 2300/0071; H01M 2300/0082;
H01M 2300/0085; H01M 2300/0091;
H01M 2300/0094

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.10.2024 KR 20240134461**

(71) Applicant: **SK On Co., Ltd.**
**Seoul 03161 (KR)**

(72) Inventors:
• **PARK, Myung Soo**
  **34124 Daejeon (KR)**
• **PARK, Seong Jin**
  **34124 Daejeon (KR)**
• **HAN, Ju Sung**
  **34124 Daejeon (KR)**
• **RYU, Hye Min**
  **34124 Daejeon (KR)**
• **LEE, Seung Hwan**
  **34124 Daejeon (KR)**

(74) Representative: **Prüfer & Partner mbB**
**Patentanwälte · Rechtsanwälte**
**Sohnckestraße 12**
**81479 München (DE)**

(54) **COMPOSITE SOLID ELECTROLYTE AND ALL-SOLID-STATE BATTERY INCLUDING THE SAME**

(57)   Provided is a composite solid electrolyte including: a support layer including a high heat resistant polymer; and an electrolyte layer which is formed on both surfaces of the support layer and includes a fluorine-based polymer and lithium ion conductive inorganic particles, wherein the support layer includes an interpenetration layer in which at least a part of constituent components of the electrolyte layer are mixed.

FIG. 1

## Description

### CROSS-REFERENCE TO RELATED APPLICATIONS

This application claims priority under 35 U.S.C. §119 to Korean Patent Application No. 10-2024-0134461, filed on October 04, 2024, in the Korean Intellectual Property Office, the disclosure of which is incorporated herein by reference in its entirety.

### TECHNICAL FIELD

The following disclosure relates to a composite solid electrolyte and an all-solid-state battery including the same.

### BACKGROUND

As the development of a battery having both improved energy density and safety is demanded, an all-solid-state battery using a solid electrolyte instead of a conventional liquid electrolyte is in the spotlight as a next generation battery. A conventional all-solid-state battery mostly uses an inorganic solid electrolyte, and this may implement high ion conductivity, but has problems such as high interfacial resistance with an electrode, dendrite formation, and processability degradation. Meanwhile, a polymer solid electrolyte has low interfacial resistance and may be applied to flexible devices, but has a critical limitation of low ion conductivity.

As a method for solving the problems, a composite solid electrolyte (CSE) in which an inorganic solid electrolyte and a polymer solid electrolyte are mixed has been suggested and is being actively studied, but the development of a new material which may satisfy excellent thermal and mechanical stability, ion conductivity, and processability simultaneously is still needed.

### SUMMARY

An embodiment of the present invention is directed to providing a composite solid electrolyte which may secure excellent mechanical and thermal stability and ion conductivity simultaneously, and a method for manufacturing the same.

Another embodiment of the present invention is directed to providing an all-solid-state battery which may have both excellent battery performance and safety by employing the composite solid electrolyte.

In one general aspect, a composite solid electrolyte includes: a support layer including a high heat resistant polymer; and an electrolyte layer which is formed on both surfaces of the support layer and includes a fluorine-based polymer and lithium ion conductive inorganic particles, wherein the support layer includes an interpenetration layer in which at least a part of constituent components of the electrolyte layer are mixed.

The interpenetration layer may include the fluorine-based polymer, the lithium ion conductive inorganic particles, or a combination thereof.

The composite solid electrolyte according to an exemplary embodiment may further include an organic electrolyte.

The organic electrolyte may be selected from a liquid electrolyte, a gel polymer electrolyte, or a combination thereof.

The composite solid electrolyte according to an exemplary embodiment may have an organic electrolyte uptake rate of 20 to 70%.

The composite solid electrolyte according to an exemplary embodiment may have a thickness of 10 to 500 $\mu$m.

In the composite solid electrolyte according to an exemplary embodiment, a ratio ($T_2/T_1$) between a support layer thickness ($T_1$) and an electrolyte layer thickness ($T_2$) may be 0.3 to 3.

The fluorine-based polymer and the lithium ion conductive inorganic particles may be included at a weight ratio of 1:9 to 6:4.

The high heat resistant polymer may have a melting point of 150°C or higher.

The high heat resistant polymer may be an expanded polytetrafluoroethylene (ePTFE).

The lithium ion conductive inorganic particles may be selected from a garnet-type oxide, a NASICON-type oxide, and a perovskite-type oxide.

The fluorine-based polymer may be poly(vinylidene fluoride) (PVDF); a copolymer of a vinylidene fluoride monomer and one or more selected from trifluoroethylene (TrFE), tetrafluoroethylene (TFE), hexafluoropropylene (HFP), trichloroethylene (TrCE), trichlorofluoroethylene (TCFE), chlorotrifuloroethylene (CTFE), polymethyl methacrylate (PMMA), and polyvinyl acetate (PVAc); or a combination thereof.

In another general aspect, an all-solid-state battery includes the composite solid electrolyte.

In still another general aspect, a method for manufacturing a composite solid electrolyte includes: (S1) applying a composition for forming an electrolyte layer including a fluorine-based polymer, lithium ion conductive inorganic particles, and an organic solvent on one surface of a porous high heat resistant polymer support and drying the composition to form an electrolyte layer; and (S2) repeating (S1) on the other surface of the support layer to form an electrolyte layer.

The organic solvent may be a mixed solvent of an ether-based organic solvent and a hydrocarbon-based organic solvent.

The mixed solvent may include the ether-based organic solvent and the hydrocarbon-based organic solvent at a weight ratio of 5 to 50:1.

The method for manufacturing a composite solid electrolyte according to an exemplary embodiment may further include impregnating the organic electrolyte.

Other features and aspects will be apparent from the following detailed description, the drawings, and the claims.

## BRIEF DESCRIPTION OF THE DRAWINGS

FIG. 1 shows a cross-section of the composite solid electrolyte according to an implementation example.
FIG. 2 is a Zr element SEM-EDS qualitative analysis (SEM-EDS mapping) photograph of the cross-section of the composite solid electrolyte according to Example 1.
FIG. 3 is a Zr element SEM-EDS qualitative analysis (SEM-EDS mapping) photograph of the cross-section of the composite solid electrolyte according to Comparative Example 2.
FIG. 4 shows results of high temperature stability evaluation.
FIG. 5 shows results of high voltage stability evaluation (floating test).
FIG. 6 shows results of high voltage stability evaluation (cyclic voltammetry).

## DETAILED DESCRIPTION OF EMBODIMENTS

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

In the present specification, "high heat resistant polymer" refers to a polymer having a melting point ($T_m$) of 150°C or higher.

Hereinafter, the present disclosure will be described in detail. However, it is only illustrative, and the present disclosure is not limited to the specific exemplary embodiment which is illustratively described.

The present disclosure provides a composite solid electrolyte which may effectively supplement the problems of conventional inorganic solid electrolyte and polymer solid electrolyte and secure excellent mechanical and thermal stability and ion conductivity simultaneously, and a method for manufacturing the same.

Specifically, the composite solid electrolyte according to an exemplary embodiment includes a support layer including a high heat resistant polymer; and an electrolyte layer which is formed on both surfaces of the support layer and includes a fluorine-based polymer and lithium ion conductive inorganic particles, wherein the support layer includes an interpenetration layer in which at least a part of the constituent components of the electrolyte layer are mixed.

Since the composite solid electrolyte according to an exemplary embodiment satisfies the above constituent combination, it may secure excellent mechanical stability, thermal stability, and ion conductivity simultaneously and later provide an all-solid-state battery having all of excellent energy density, battery performance, and safety.

In an exemplary embodiment, the high heat resistant polymer may have a melting point ($T_m$) of 150°C or higher, 170°C or higher, 200°C or higher, 250°C or higher, 300°C or higher, 500°C or lower, or 400°C or lower, or a median value of the values. Specifically, the high heat resistant polymer may have the melting point of 150°C to 400°C, 170°C to 400°C, 200°C to 400°C, or 300°C to 400°C. As an example, the high heat resistant polymer may be an expanded polytetrafluoroethylene (ePTFE) or poly(vinylidene fluoride) (PVDF) and improve the mechanical and thermal stability of the composite solid electrolyte.

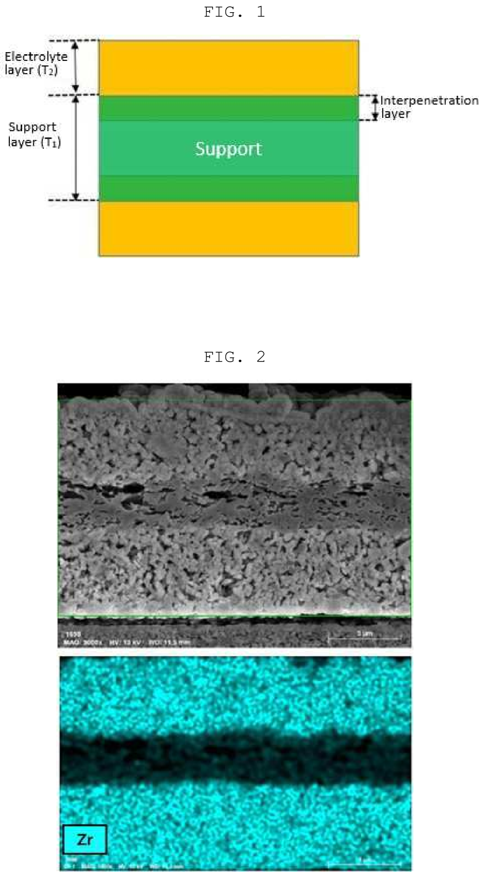

In an exemplary embodiment, the thickness ($T_1$) of the support layer may be 3 to 50 $\mu$m, 3 to 30 $\mu$m, 3 to 20 $\mu$m, or 3 to 15 $\mu$m, in which the thickness of the support layer refers to a value obtained by subtracting the thickness of the electrolyte layer formed on both surfaces from the total thickness of the composite solid electrolyte according to an exemplary embodiment (FIG. 1).

The thickness of the electrolyte layer refers to a thickness of a section where only the constituent components of the electrolyte layer are present when the cross-section of the composite solid electrolyte is observed with a scanning electron microscope (SEM), the thickness ($T_2$) of the electrolyte layer formed on one surface of the support layer may be 1 to 20 $\mu$m, 1 to 15 $\mu$m, 1 to 10 $\mu$m, 1 to 7 $\mu$m, or 1 to 5 $\mu$m, and the total thickness of the electrolyte layer formed on both surfaces may be 2 to 40 $\mu$m, 2 to 30 $\mu$m, 2 to 20 $\mu$m, 2 to 15 $\mu$m, or 2 to 10 $\mu$m.

In addition, a ratio ($T_2/T_1$) between the thickness ($T_1$) of the support layer and the thickness ($T_2$) of the electrolyte layer may be 0.3 to 3, 0.3 to 1.5, or 0.3 to 1, and within the numerical range, the effect of improving heat resistance, mechanical strength, and ion conductivity of the composite solid electrolyte simultaneously may be improved.

In an exemplary embodiment, the electrolyte layer may include the fluorine-based polymer and the lithium ion conductive inorganic particles at a weight ratio of 1:9 to 9:1, 1:9 to 8:2, 1:9 to 7:3, 1:9 to 6:4, 1:9 to 5:5, or 1:9 to 4:6.

The fluorine-based polymer may be used without limitation, as long as it is commonly used in the art, but, as a non-limiting example, may be poly(vinylidene fluoride) (PVDF); a copolymer of a vinylidene fluoride monomer and one or more selected trifluoroethylene (TrFE), tetrafluoroethylene (TFE), hexafluoropropylene (HFP), trichloroethylene (TrCE), trichlorofluoroethylene (TCFE), chlorotrifuloroethylene (CTFE), polymethyl methacrylate (PMMA), and polyvinyl acetate (PVAc); or a combination thereof.

As an example, the fluorine-based polymer may be a polyvinylidene fluoride-co-hexafluoropropylene copolymer (PVdF-co-HFP), or a polyvinylidene fluoride-co-hexafluoropropylene copolymer (PVdF-co-HFP) including 1 to 50 wt%, 5 to 30 wt%, or 10 to 20 wt% of HFP.

As an example, the fluorine-based polymer may have a weight average molecular weight (Mw) of 100,000 to 5,000,000 g/mol, 200,000 to 3,000,000 g/mol, 200,000 to 2,000,000 g/mol, or 300,000 to 1,000,000 g/mol, but is not limited thereto. In addition, the fluorine-based polymer may have a number average molecular weight (Mn) of 50,000 to 3,000,000 g/mol, 50,000 to 1,000,000 g/mol, or 80,000 to 500,000 g/mol, but is not limited thereto.

The lithium ion conductive inorganic particles may be used without limitation as long as they are commonly used in the art, and as a non-limiting example, may be selected from a garnet-type oxide such as $Li_7La_3Zr_2O_{12}$ (LLZO), a NASICON-type oxide such as $Li_{1.3}Al_{0.3}Ti_{1.7}(PO_4)_3$ (LATP), and a perovskite-type oxide such as $La_{0.51}Li_{0.34}TiO_{2.94}$ (LLTO).

The interpenetration layer refers to a section in which the constituent components of the support layer and at least a part of the constituent components of the electrolyte layer, for example, the fluorine-based polymer, the lithium ion conductive inorganic particles, or a combination thereof are mixed, and the thickness of the interpenetration layer may refer to a thickness from the boundary of the electrolyte layer and the support layer to the point where the elements of the lithium ion conductive inorganic particles of the electrolyte layer are detected in the direction of the support layer, when making an observation in the direction of the thickness of the composite solid electrolyte using scanning electron microscopy-energy dispersive X-ray spectroscopy (SEM-EDS). The total thickness of the interpenetration layer is not particularly limited, but, for example, may be 0.1 $\mu$m or more, 0.2 $\mu$m or more, 0.3 $\mu$m or more, 0.4 $\mu$m or more, 0.5 $\mu$m or more, or 1.0 $\mu$m or more, and the composite solid electrolyte according to an implementation example may include even a case in which the constituent components of the electrolyte layer are mixed in the entire support layer. When the range is satisfied, the mechanical strength and the ion conductivity characteristics of the composite solid electrolyte may be improved.

In an exemplary embodiment, a means of forming the interpenetration layer is not particularly limited as long as the interpenetration layer is formed, but, may be, for example, the drying conditions when forming the electrolyte layer, for example, adjustment of a drying temperature and a drying time and adjustment of stepwise drying temperature and time and the like.

The composite solid electrolyte according to an exemplary embodiment may have a thickness of 5 to 500 $\mu$m, 8 to 500 $\mu$m, 8 to 400 $\mu$m, 8 to 300 $\mu$m, 8 to 200 $\mu$m, 8 to 100 $\mu$m, or 10 to 50 $\mu$m.

The composite solid electrolyte according to an exemplary embodiment may further include an organic electrolyte, and specifically, may be an impregnated organic electrolyte selected from a liquid electrolyte, a gel polymer electrolyte, or a combination thereof. Herein, the organic electrolyte uptake rate of the composite solid electrolyte may be 20 to 70%, 30 to 70%, or 40 to 70%, and improved ion conductivity may be implemented.

The liquid electrolyte may include an organic solvent and a metal salt.

The organic solvent of the liquid electrolyte may be used alone or in combination of two or more, and when used in combination of two or more, the mixing ratio may be appropriately adjusted depending on the performance of a battery to be desired. As an example, the organic solvent may be a nonaqueous organic solvent and may include a solvent selected from a cyclic carbonate solvent, a linear carbonate solvent, and a mixed solvent, and the cyclic carbonate solvent may be selected from the group consisting of ethylene carbonate, propylene carbonate, butylene carbonate, vinylene carbonate, vinyl ethylene carbonate, fluoroethylene carbonate and a mixture thereof; and the linear carbonate may be selected from the group consisting of dimethyl carbonate, diethyl carbonate, dipropyl carbonate, ethyl methyl carbonate, methyl propyl carbonate, methyl isopropyl carbonate, ethyl propyl carbonate and a mixture thereof, but is not limited thereto. In addition, a solvent known in the art may be used, but is not limited thereto.

The metal salt of the liquid electrolyte may act as a source of the metal ion in a battery to allow basic operation of a secondary battery and promote movement of lithium ions between a positive electrode and a negative electrode, and may be, for example, a lithium salt. A non-limiting example of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), $LiCl$, $LiI$, $LiB(C_2O_4)_2$, or a combination thereof, but is not limited thereto. The concentration of the lithium salt may be in a range of 0.1 M to 5.0 M or 0.1 M to 2.0 M.

The gel polymer electrolyte may include an organic solvent, a metal salt, and a polymer electrolyte, and the gel polymer electrolyte may be manufactured by polymerizing a gel polymer electrolyte composition including an organic solvent, a metal salt, and a monomer for a polymer electrolyte.

Since the organic solvent and the metal salt are as described above for the liquid electrolyte, the descriptions will be omitted. The polymer electrolyte may be used without limitation as long as it is commonly used in the art, but, as an example, may be a polyfunctional acrylate-based polymer. Specifically, the polyfunctional acrylate-based polymer may include a polymerization unit derived from a monomer for a polyfunctional acrylate-based polymer electrolyte selected from the group consisting of trimethylolpropane ethoxylate triacrylate, trimethylolpropane propoxylate triacrylate, polyethylene glycol dimethacrylate, polyethylene glycol diacrylate, polyester dimethacrylate, trimethylolpropane trimethacrylate, ethoxylated bis phenol A dimethacrylate, tetraethylene glycol diacrylate, 1,4-butanediol diacrylate, 1,6-hexanediol diacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, and a combination thereof.

The gel polymer electrolyte composition may further include an initiator and may further include a photoinitiator or a thermal initiator depending on a polymerization method. The initiator may be a known initiator without limitation, but as an example of the photoinitiator, may be selected from a acetophenone-based compound, a benzophenone-based compound, a triazine-based compound, a benzoin-based compound, an imidazole-based compound, a xanthone-based compound, a phosphine-based compound, and an oxime-based compound, but is not limited thereto. An example of the thermal initiator may be selected from benzoyl peroxide (BPO), dicumyl peroxide (DCP), azobisisobutyronitrile (AIBN), amyl peroxypivalate, t-butyl peroxypivalate, and the like, but is not limited thereto.

In an exemplary embodiment, the organic electrolyte may further include an additive, if necessary. As an example, pyridine, triethylphosphate, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, and the like may be further included, for improving charge/discharge characteristics, flame retardant characteristics, and the like. In some cases, a halogen-containing solvent such as carbon tetrachloride and ethylene trifluoride may be further included for imparting non-flammability, and fluoro-ethylene carbonate (FEC), propene sultone (PRS), fluoro-propylene carbonate(FPC), and the like may be further included for improving conservation properties at a high temperature.

The composite solid electrolyte according to an exemplary embodiment may have an ion conductivity at 25°C of $1.0\times10^{-4}$ S/cm or more, $2.0\times10^{-4}$ S/cm or more, $3.0\times10^{-4}$ S/cm or more, or $5.0\times10^{-4}$ S/cm or more, and the upper limit may be $30.0\times10^{-4}$ S/cm or less, $25.0\times10^{-4}$ S/cm or less, $20.0x10^{-4}$ S/cm or less, or $15.0\times10^{-4}$ S/cm or less.

Another embodiment of the present invention provides an all-solid-state battery including the composite solid electrolyte described above. The all-solid-state battery according to an implementation example may be manufactured in a structure known in the art, using common manufacturing method and materials in the art, except for including the composite solid electrolyte, and the all-solid-state battery may be a lithium secondary battery, a sodium secondary battery, or a potassium secondary battery.

The all-solid-state battery according to an exemplary embodiment includes a positive electrode and a negative electrode, the composite solid electrolyte layer is included between the positive electrode and the negative electrode, and the solid electrolyte layer may include the composite solid electrolyte according to an embodiment, in which the positive electrode and the negative electrode may be used without limitation as long as they are commonly applied to a secondary battery.

Another embodiment of the present invention provides a method for manufacturing a composite solid electrolyte including: (S1) applying a composition for forming an electrolyte layer including a fluorine-based polymer, lithium ion conductive inorganic particles, and an organic solvent on one surface of a support including a porous high heat resistant polymer and drying the composition to form an electrolyte layer; and (S2) repeating (S1) on the other surface of the support to form an electrolyte layer.

The composite solid electrolyte manufactured by the manufacturing method may have an interpenetration layer which is a section where constituent components of the electrolyte layer are mixed, formed inside the support when the electrolyte layer is formed, and thus, a composite solid electrolyte in which the support layer including the interpenetration layer and the electrolyte layer on both surfaces of the support layer are formed may be provided.

Since the support layer, the interpenetration layer, and the electrolyte layer are as described above, the descriptions will be omitted.

In an exemplary embodiment, the application may use a commonly used or known coating or application method without large limitation, and as an example, may use a method such as spin coating, dip coating, inkjet printing, spray coating, screen printing, drop casting, or a doctor blade. In addition, an application amount may be easily adjusted depending on the thickness of the electrolyte layer to be manufactured.

In an exemplary embodiment, a means of forming the interpenetration layer is not particularly limited as long as the interpenetration layer is formed, but, may be, for example, the drying conditions when forming the electrolyte layer, for example, adjustment of a drying temperature and a drying time and adjustment of stepwise drying temperature and time and the like.

In an exemplary embodiment, the drying may be performed stepwisely, may be performed by first drying at 0 to 60°C or 10 to 40°C for 30 to 180 minutes for 60 to 120 minutes and then second drying at 80 to 300°C or 90 to 150°C for 240 to 600 minutes, 300 to 600 minutes, 300 to 500 minutes, or 360 to 480 minutes, and may facilitate formation of the interpenetration layer.

In an exemplary embodiment, the organic solvent of the composition for forming an electrolyte layer may be a mixed solvent of an ether-based organic solvent and a hydrocarbon-based organic solvent. In this case, the ether-based organic solvent and the hydrocarbon-based organic solvent may be included at a weight ratio of 5 to 50:1, specifically at a weight ratio of 5 to 30:1, 5 to 20:1, or 5 to 15:1, and may improve the uptake rate of the organic electrolyte later.

The ether-based organic solvent may be an acyclic ether-based organic solvent, a cyclic ether-based organic solvent, or a mixture thereof. A non-limiting example of the ether-based organic solvent may include 1,2-dimethoxyethane, 1,2-diethoxyethane, 1,2-dibuthoxyethane, diethylene glycol dimethyl ether, diethylene glycol diethyl ether, triethylene glycol dimethyl ether, triethylene glycol diethyl ether, tetraethylene glycol dimethyl ether, tetraethylene glycol diethyl ether, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyl tetrahydrofuran, 2,5-dimethoxy tetrahydrofuran, 2-ethoxy tetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether, and the like.

The hydrocarbon-based organic solvent may be a $C_{3-30}$ hydrocarbon-based organic solvent or a $C_{5-12}$ hydro-carbon-based organic solvent, and specifically, any one or a combination of two or more selected from the group consisting of pentane, hexane, heptane, octane, nonane, decane, undecane, dodecane, and the like.

In addition, the method for manufacturing a composite solid electrolyte according to an implementation example may further include impregnating an organic electrolyte after (S2), and the organic electrolyte may be selected from a liquid electrolyte, a gel polymer electrolyte, or a combination thereof. Specifically, the step of impregnating with the organic electrolyte may be impregnating the composite solid electrolyte obtained in (S2) with a liquid electrolyte or a gel polymer electrolyte composition and performing drying and/or heat treatment. Since the liquid electrolyte and the gel polymer electrolyte composition are as described above, the descriptions will be omitted.

In an exemplary embodiment, when the gel polymer electrolyte is impregnated with the type of organic electrolyte, the method for manufacturing a composite solid electrolyte according to an implementation example may include: (S1) applying and coating a composition for forming an electrolyte layer including a fluorine-based polymer, lithium ion conductive inorganic particles, and an organic solvent on one surface of a support including a porous high heat resistant polymer and drying to form an electrolyte layer; (S2) repeating (S1) on the other surface of the support to form an electrolyte layer to obtain a composite solid electrolyte; and (S3) impregnating the composite solid electrolyte obtained in (S2) with a gel polymer electrolyte composition and performing thermal polymerization.

The thermal polymerization may be performed in a range of 50 to 300°C, 50 to 200°C, or 70 to 200°C using a heating device such as an oven.

Hereinafter, the implementation examples described above will be described in detail through the following examples. However, the following examples are only for description, and do not limit the scope of a right.

**[Preparation Example 1]**

1 M LiPF$_6$ was dissolved in a mixed solvent of ethylene carbonate and ethyl methyl carbonate (volume ratio of EC:EMC=3:7), 5 wt% of fluoroethylene carbonate (FEC), 5 wt% of trimethylolpropane ethoxylate triacrylate (TMPETA), and tert-butyl peroxypivalate (t-BPP) as a thermal initiator in an amount of 1 wt% of TMPETA were added to prepare a gel polymer electrolyte composition.

**<Composite solid electrolyte>**

**[Example 1]**

P(VdF-co-HFP) (HFP 10 wt%, $M_n$ 280,000 g/mol) as a fluorine-based polymer was dissolved at a concentration of 20 wt% in tetrahydrofuran (THF), garnet-type LLZO ($Li_7La_3Zr_2O_{12}$) and octane were added, and stirring/ball milling was performed to prepare a composition for forming an electrolyte layer. At this time, tetrahydrofuran and octane were added so as to satisfy a weight ratio of 10:1, and the fluorine-based polymer and the garnet-type LLZO were added so as to satisfy a weight ratio of 2:8.

The thus-prepared composition for forming an electrolyte layer was cast on one surface of an expanded polytetrafluoroethylene (ePTFE) support (SYNOPEX, melting point: 327°C) having a thickness of about 6 $\mu$m with a doctor blade, first dried at room temperature for 60 minutes, and then second dried at 100°C for 480 minutes under vacuum conditions to form an electrolyte layer having a thickness of about 10 $\mu$m. Subsequently, the coating process was identically repeated on the other surface of the support to obtain a composite solid electrolyte.

FIG. 2 is an image from qualitative analysis (SEM-EDS mapping) of a Zr element using SEM EDS on the cross-section of the composite solid electrolyte obtained above, and it was found that the Zr element as the constituent component of the electrolyte layer was present inside the ePTFE support, and it was confirmed that an interpenetration layer which is a section where the constituent components of the electrolyte layer were mixed was formed inside the support.

**[Example 2]**

The process was performed in the same manner as in Example 1, except that the thickness of the electrolyte layer was changed from about 10 $\mu$m to 7 $\mu$m.

**[Examples 3 and 4]**

Composite solid electrolytes impregnated with a gel polymer electrolyte (organic electrolyte) were obtained by impregnating the composite solid electrolytes obtained in Examples 1 and 2 with the gel polymer electrolyte composition of Preparation Example 1 and curing at 80°C for 30 minutes.

**[Comparative Example 1]**

A composite solid electrolyte having a thickness of about 25 $\mu$m was obtained by casting the composition for forming an electrolyte layer obtained in Example 1 on a glass substrate instead of ePTFE, first drying at room temperature for 60 minutes, and then second drying at 100°C for 480 minutes under vacuum conditions.

**[Comparative Example 2]**

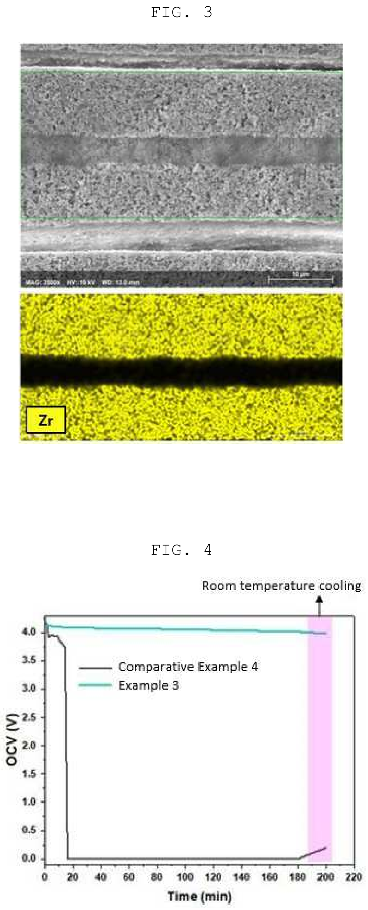

The manufacturing process of Comparative Example 1 was identically performed to obtain two composite solid electrolytes having a thickness of about 10 $\mu$m, which were compressed on both surfaces of ePTFE at a high temperature of 80°C to obtain a composite solid electrolyte, and it was confirmed from SEM-EDS analysis that an interpenetration layer was not formed (FIG. 3).

**[Comparative Example 3]**

A composite solid electrolyte impregnated with a gel polymer electrolyte (organic electrolyte) was obtained by impregnating the composite solid electrolyte obtained in Comparative Example 2 with the gel polymer electrolyte composition of Preparation Example 1 and curing at 80°C for 30 minutes.

**[Comparative Example 4]**

A polyethylene porous film (SKIET, porosity: 42%, melting point: 130°C) having a thickness of about 10 $\mu$m was impregnated with the gel polymer electrolyte composition of Preparation Example 1 and cured at 80°C for 30 minutes.

**<Evaluation Example>**

**Evaluation 1. Mechanical strength**

The ultimate tensile strength and the strain of the composite solid electrolytes of Examples 1 and 2 and Comparative Examples 1 and 2 were measured in accordance with ASTM D638 and are shown in the following Table 1.

**Evaluation 2. Organic electrolyte uptake rate (%)**

The organic electrolyte uptake rates of Examples 3 and 4 and Comparative Example 3 were calculated by the following Calculation Formula 1, and the results are shown in the following Table 2:

$$[\text{Calculation Formula 1}]$$

$$\frac{W - W_0}{W_0} \times 100$$

wherein $W_0$ is a weight of a composite solid electrolyte before being impregnated with an organic electrolyte, and W is a weight of a composite solid electrolyte impregnated with an organic electrolyte.

**Evaluation 3. Conductance (S)**

The composite solid electrolytes obtained in Examples 3 and 4 and Comparative Example 3 were overlapped between the same two sheets of stainless foil to manufacture measurement cells. Based on electrochemical impedance spectroscopy (EIS) analysis, an alternating current amplitude at 10 mV in a frequency range of 0.1 mHz to 3 Mhz was applied at room temperature to measure impedance (resistance) and the conductance was calculated (1/resistance). The results are shown in the following Table 2.

[Table 1]

| | Tensile strength (MPa) | Strain (%) |
|---|---|---|
| Example 1 | 32.5 | 43.0 |
| Example 2 | 43.8 | 41.5 |
| Comparative Example 1 | 13.1 | 10.39 |
| Comparative Example 2 | 22.1 | 44.8 |

[Table 2]

| | Uptake rate (%) | Conductance (S) |
|---|---|---|
| Example 3 | 64.9 | 0.55 |
| Example 4 | 61.2 | 0.70 |
| Comparative Example 3 | 40.5 | 0.18 |

Referring to Tables 1 and 2, since the composite solid electrolytes according to the examples of the present invention included a high heat resistant support and an interpenetration layer, it was found that they were able to secure excellently improved mechanical strength as compared with the comparative examples and also had excellent conductance. In particular, though Comparative Example 2 in which the interpenetration layer was not formed was manufactured with the same composition as in the examples of the present invention, it had significantly deteriorated mechanical strength, and Comparative Example 3 in which Comparative Example 2 was impregnated with an organic electrolyte was also confirmed to have greatly deteriorated conductance.

**Evaluation 4. Stability**

High temperature stability

A graphite negative electrode (4.4 mAh/cm$^2$), a NCM811 positive electrode (4.0 mAh/cm$^2$), and the composite solid electrolytes of Example 3 and Comparative Example 4 obtained above were applied, respectively, to manufacture pouch cells having a capacity of 80 mAh. The cells were fully charged to 4.2 V, a pressurized jig was fastened, and a surface pressure of 0.1 MPa was applied. The cell in the state as such was allowed to stand at a high temperature of 150°C, voltage (open circuit voltage, OVC) decreasing trends over time were compared, and the results are shown in FIG. 4. While leaving it, it was determined that as there was less voltage drop, the high temperature stability is improved.

High voltage stability

The high voltage stability was evaluated by a floating test and cyclic voltammetry.

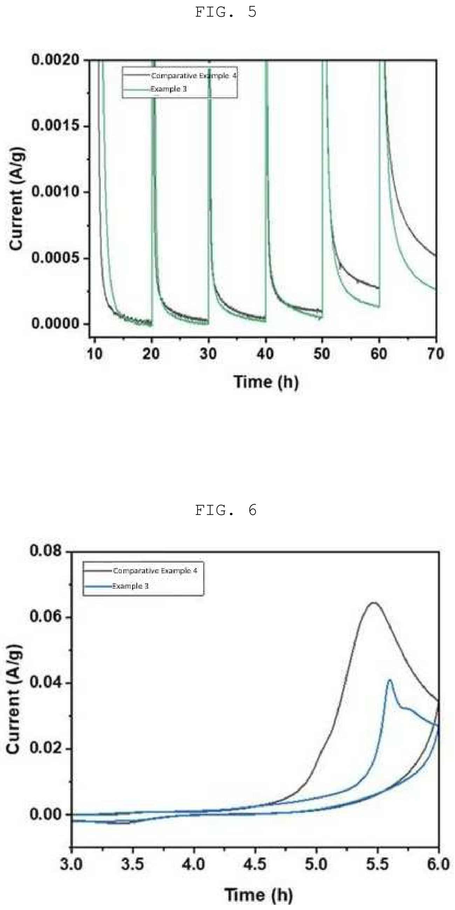

In the floating test, a lithium metal electrode (100 μm), a NCM811 positive electrode (4.0 mAh/cm$^2$), and the composite solid electrolytes of Example 3 and Comparative Example 4 obtained above were applied, respectively, to manufacture 2032 coin cells. The cells were charged to 4.2 V at a 0.1 C constant current, a current value change over time was measured while maintaining a constant voltage state (floating) from 4.2 V to 4.7 V at 0.1 V intervals for 10 hours, respectively, the results are shown in FIG. 5, and at this time, as the produced current value was lower, it was determined that there was no electrolyte oxidation decomposition in a positive electrode, and the high voltage stability was excellent.

The lithium metal electrode (100 μm), a SUS working electrode, and the composite solid electrolyte obtained in Example 3 and Comparative Example 4 above were applied, respectively, to cyclic voltammetry to manufacture 2032 coin cells. The test was performed by raising the voltage of the working electrode part of the cell from 3.0 V to 6.0 V at a rate of 1 mV/sec and lowering in the opposite direction at the same rate to complete one cycle. The results of measuring the current value over time for one cycle are shown in FIG. 6, and at this time, as the produced current value was lowered, it was determined that there was no electrolyte oxidation decomposition in the working electrode and high voltage stability was excellent.

Referring to FIG. 4, it was found that the cell employing the composite solid electrolyte of Example 3 had an extremely low heat shrinkage rate at a high temperature, was able to stably maintain OCV at a high temperature for a long time, was able to effectively prevent high temperature short circuit, and thus, had excellent high temperature stability. However, the cell employing the solid electrolyte of Comparative Example 4 shrank and rapidly reduced OCV when being allowed to stand at a high temperature.

Referring to FIGS, 5 and 6, the cell employing the composite solid electrolyte of Example 3 also had excellent oxidation stability at a high voltage as compared with the cell employing the solid electrolyte of Comparative Example 4.

The composite solid electrolyte according to an exemplary embodiment may satisfy all of high ion conductivity, excellent thermal and chemical stability, and mechanical strength. In addition, an all-solid-state battery including the composite solid electrolyte according to an exemplary embodiment may have excellent safety and also may show excellent battery performance such as energy density, life characteristics, and high temperature and high voltage stability. In addition, the composite solid electrolyte according to an implementation example may be applied to a process used in mass production such as a roll to roll process and may be favorable for commercialization.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

Therefore, the present disclosure is not limited to the above-described exemplary embodiments, and the following claims as well as all modifications equal or equivalent to the claims are intended to fall within the scope of the disclosure.

**Claims**

1. A composite solid electrolyte comprising: a support layer including a high heat resistant polymer; and an electrolyte layer which is formed on both surfaces of the support layer and includes a fluorine-based polymer and lithium ion conductive inorganic particles,
   wherein the support layer includes an interpenetration layer in which at least a part of constituent components of the electrolyte layer are mixed.

2. The composite solid electrolyte of claim 1, wherein the interpenetration layer includes the fluorine-based polymer, the lithium ion conductive inorganic particles, or a combination thereof.

3. The composite solid electrolyte of claim 1 or 2, further comprising an organic electrolyte, optionally wherein the organic electrolyte is selected from a liquid electrolyte, a gel polymer electrolyte, or a combination thereof.

4. The composite solid electrolyte of claim 3, wherein an organic electrolyte uptake rate of the composite solid electrolyte is 20 to 70%.

5. The composite solid electrolyte of any one of claims 1 to 4, wherein the composite solid electrolyte has a thickness of 10 to 500 $\mu$m;
and/or
wherein a ratio ($T_2/T_1$) between a support layer thickness ($T_1$) and an electrolyte layer thickness ($T_2$) is 0.3 to 3.

6. The composite solid electrolyte of any one of claims 1 to 5, wherein the electrolyte layer includes the fluorine-based polymer and the lithium ion conductive inorganic particles at a weight ratio of 1:9 to 6:4.

7. The composite solid electrolyte of any one of claims 1 to 6, wherein the high heat resistant polymer has a melting point of 150°C or higher.

8. The composite solid electrolyte of claim 7, wherein the high heat resistant polymer is an expanded polytetrafluoroethylene (ePTFE).

9. The composite solid electrolyte of any one of claims 1 to 8, wherein the lithium ion conductive inorganic particles are selected from a garnet-type oxide, a NASICON-type oxide, and a perovskite-type oxide.

10. The composite solid electrolyte of any one of claims 1 to 9, wherein the fluorine-based polymer is poly(vinylidene fluoride) (PVDF); a copolymer of a vinylidene fluoride monomer and one or more selected from trifluoroethylene (TrFE), tetrafluoroethylene (TFE), hexafluoropropylene (HFP), trichloroethylene (TrCE), trichlorofluoroethylene (TCFE), chlorotrifuloroethylene (CTFE), polymethyl methacrylate (PMMA), and polyvinyl acetate (PVAc); or a combination thereof.

11. An all-solid-state battery comprising the composite solid electrolyte of any one of claims 1 to 10.

12. A method for manufacturing a composite solid electrolyte, the method comprising: (S1) applying a composition for forming an electrolyte layer including a fluorine-based polymer, lithium ion conductive inorganic particles, and an organic solvent on one surface of a porous high heat resistant polymer support and drying the composition to form an electrolyte layer; and (S2) repeating (S1) on the other surface of the support layer to form an electrolyte layer.

13. The method for manufacturing a composite solid electrolyte of claim 12, wherein the organic solvent is a mixed solvent of an ether-based organic solvent and a hydrocarbon-based organic solvent.

14. The method for manufacturing a composite solid electrolyte of claim 13, wherein the mixed solvent includes the ether-based organic solvent and the hydrocarbon-based organic solvent at a weight ratio of 5 to 50:1.

15. The method for manufacturing a composite solid electrolyte of any one of claims 12 to 14, further comprising: impregnating the composite solid electrolyte with the organic electrolyte after (S2).

FIG. 1

FIG. 2

FIG. 3

FIG. 4

FIG. 5

FIG. 6

Europäisches
Patentamt

European
Patent Office

Office européen
des brevets

**EUROPEAN SEARCH REPORT**

Application Number

EP 25 20 6097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 380 636 A (ZHEJIANG FENGLI NEW ENERGY TECH CO LTD) 23 July 2024 (2024-07-23) * paragraph [0006] * * paragraph [0011] - paragraph [0026] * * paragraph [0032] - paragraph [0060] * ----- | 1-4,7, 9-15 | INV. H01M10/052 H01M10/056 |
| X | CN 115 663 273 A (UNIV SOUTH CHINA TECH; GUANGZHOU INSTITUTE OF MODERN INDUSTRIAL TECH) 31 January 2023 (2023-01-31) * paragraph [0009] - paragraph [0020] * * examples 1-6 * ----- | 1-11 | |

| | TECHNICAL FIELDS SEARCHED (IPC) |
|---|---|
| | H01M |

The present search report has been drawn up for all claims

| Place of search | Date of completion of the search | Examiner |
|---|---|---|
| The Hague | 9 March 2026 | Pipoli, Tiziana |

EPO FORM 1503 03.82 (P04C01)

## ANNEX TO THE EUROPEAN SEARCH REPORT
## ON EUROPEAN PATENT APPLICATION NO.

EP 25 20 6097

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2026

| Patent document cited in search report | | Publication date | Patent family member(s) | Publication date |
|---|---|---|---|---|
| CN 118380636 | A | 23-07-2024 | NONE | |
| CN 115663273 | A | 31-01-2023 | NONE | |

For more details about this annex : see Official Journal of the European Patent Office, No. 12/82

**EP 4 730 461 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240134461